# EUROPÄISCHE PATENTSCHRIFT

(11) **EP 0 964 508 B1**
(45) Veröffentlichungstag und Bekanntmachung des Hinweises auf die Patenterteilung: **21.04.2004**
(21) Anmeldenummer: 99201758.2
(22) Anmeldetag: 03.06.1999
(51) Int. Cl.: H02P 6/14, H02P 6/18

(54) **Schaltungsanordnung zum Speisen eines Elektromotors**
Circuit arrangement for feeding an electric motor
Disposition de circuit pour alimenter un moteur électrique

(30) Priorität: 09.06.1998 DE 19825722
(43) Veröffentlichungstag der Anmeldung: 15.12.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Steinbusch, Hans, Philips Patentverwaltung GmbH, 22335 Hamburg (DE)
(74) Vertreter: Peters, Carl Heinrich, Dipl.-Ing.

(56) Entgegenhaltungen:
- EP-A- 0 231 046
- EP-A- 0 897 213
- DE-A- 3 712 185
- DE-A- 19 749 392
- US-A- 5 204 594
- US-A- 5 497 062
- US-A- 5 793 173
- PATENT ABSTRACTS OF JAPAN vol. 015, no. 091 (P-1175), 5. März 1991 (1991-03-05) & JP 02 307070 A (MITSUBISHI ELECTRIC CORP), 20. Dezember 1990 (1990-12-20)

## Beschreibung

Die Erfindung bezieht sich auf eine Schaltungsanordnung zum Speisen eines Elektromotors mit wenigstens drei Wicklungen aus einer Gleichspannungsquelle über eine Kommutierungsschaltung, die zu je einem Wicklungsanschluß des Elektromotors einen Kommutierungszweig mit einem ersten und einem zweiten Schalterelement umfaßt, durch die der betreffende Wicklungsanschluß wahlweise mit einem ersten Anschluß der Gleichspannungsquelle oder über eine Meßimpedanz mit einem zweiten Anschluß der Gleichspannungsquelle verbunden werden kann, mit einer Ringzählvorrichtung zum periodischen Umsteuern der Schalterelemente der Kommutierungsschaltung gemäß einer durch ein Taktsignal in der Ringzählvorrichtung umlaufenden Signalfolge, wobei eine Periode der Ringzählvorrichtung einem vollständigen Umlauf der Signalfolge in der Ringzählvorrichtung entspricht, und mit einer Taktfrequenz-Erzeugungsstufe zum Abgeben des Taktsignals, das eine von der Meßspannung abhängige Taktfrequenz aufweist.

Bekannt sind elektronisch kommutierte Gleichstrommotoren, die mit Positionsmeßelementen, insbesondere Hall-Elementen, für den beweglichen Anker des Motors ausgestattet sind. Da diese Positionsmeßelemente ortsfest angeordnet sind, ist der Winkel zwischen der Ankerspannung und der elektromotorischen Kraft (EMK) des Motors bei allen Belastungen fest. Außerdem setzen derartige Positionsmeßelemente der Vereinfachung und Miniaturisierung elektronisch kommutierter Gleichstrommotoren unerwünschte Grenzen.

Eine andere, verbesserte Möglichkeit zur Kommutierung der Spulen eines Gleichstrommotors wird erhalten, wenn eine Kommutierungsfrequenz abhängig vom Motorstrom erzeugt werden kann. Dazu wird der Motorstrom über einen Vorwiderstand mit geringem Widerstandswert in der Zuleitung zum Kommutator gemessen. Um aus der Messung des Motorstroms auf dessen (mittlere) Leistung zu schließen, wird der arithmetische Mittelwert der am Vorwiderstand gemessenen Spannung, d.h. des Motorstroms, gebildet. Aus diesem Mittelwert der gemessenen Spannung kann mit Hilfe eines Spannungs-Frequenz-Konverters eine dieser Spannung proportionale Frequenz abgeleitet werden, auf deren Grundlage der Gleichstrommotor kommmutiert wird.

Es zeigt sich jedoch, daß für eine einwandfreie Funktion einer solchen Schaltungsanordnung, d.h. für eine einwandfreie Kommutierung des Gleichstrommotors, die Bildung des arithmetischen Mittelwerts für alle Motordrehzahlen zwischen dem Motorstillstand und der Höchstdrehzahl schaltungstechnisch sehr aufwendig ist. Im Handel befindliche Schaltungen bieten beispielsweise eine arithmetische Mittelwertbildung zwischen zwei Grenzfrequenzwerten an, die im Verhältnis 50:1 zueinander stehen. Wird die obere Grenzfrequenz mit der Höchstdrehzahl des Gleichstrommotors gleichgesetzt, ergibt sich ein Bereich niedriger Drehzahlen, der mit einer solchen Anordnung nicht oder zumindest nicht einwandfrei betrieben werden kann.

Aus der EP 0 156 282 A1 sind ein Verfahren und eine Anordnung zur Steuerung eines bürstenlosen Wechselstrommotors bekannt, der durch eine sogenannte Inverterschaltung betrieben wird, die an eine Gleichspannungsquelle angeschlossen ist. Der der Inverterschaltung zugeführte Gleichstrom wird gemessen. Das aus dieser Messung resultierende Meßsignal wird einerseits in einem Spitzenwertdetektor für die Detektion positiver Stromspitzen zu einem Spitzenwertsignal verarbeitet, welches einem ersten Regler zur Erzeugung eines Frequenzsteuersignals zugeführt wird. Dieser Regler verringert den Wert des Frequenzsteuersignals, wenn der,Spitzenwert des Motorstroms einen vorgegebenen Wert überschreitet. Aus dem Frequenzsteuersignal wird über einen spannungsgesteuerten Oszillator ein Taktsignal erzeugt, dessen Frequenz über einen Frequenzteiler und einen Ringzähler die Grundlage für die Kommutierung des Wechselstrommotors über die Inverterschaltung bildet. Aus dem Meßsignal, welches aus dem Motorstrom gewonnen wird, wird außerdem ein Mittelwert gebildet und das so erzeugte Mittelwertsignal durch das Frequenzsteuersignal dividiert, um ein Drehzahlanforderungssignal zu erhalten. Außerdem wird aus dem Meßsignal in einem zweiten Spitzenwertdetektor ein den negativen Stromspitzen des Motorstroms entsprechendes zweites Spannungssteuersignal gebildet, welches ein Maß für die Magnetisierung des Motors darstellen soll. Aus der Differenz des Drehzahlanforderungssignals und des zweiten Spannungssteuersignals wird ein Impulsbreiten-Steuersignal abgeleitet. In einer Impulsbreiten-Steuerstufe ("Timer") werden mit diesem Impulsbreiten-Steuersignal die Impulsbreiten des Taktsignals vom spannungsgesteuerten Oszillator gesteuert. In einer Logikschaltung aus einer Anzahl von logischen Gattern werden die Kommutierungssignale aus dem Ringzähler und dem "Timer" zu Ansteuersignalen für die Inverterschaltung verknüpft. Für die Anlaufphase und die Bremsphase des Motors ist der Regler, dem das Spitzenwertsignal vom ersten Spitzenwertdetektor (positive Stromspitzen) zugeführt wird, außerdem mit einem Steuereingang versehen, dem von einem Geschwindigkeitsanforderungseingang über einen Rampengenerator ein Rampensignal zugeführt wird. Durch dieses Rampensignal wird in der Anlaufphase und der Bremsphase der Wert des Frequenzsteuersignals erniedrigt, wodurch der spannungsgesteuerte Oszillator im Anlaufbetrieb eine allmählich ansteigende Frequenz und im Bremsbetrieb eine allmählich abnehmende Frequenz erzeugt.

Diese bekannte Anordnung enthält nicht nur die bereits vorstehend angesprochene Mittelwertbildung mit den genannten Nachteilen, sondern auch eine sehr umfangreiche, vielgliedrige Regelschleife, wodurch sich ein sehr komplizierter Aufbau ergibt. Abgesehen von der dadurch stark vermehrten Möglichkeit parasitärer Schwingungen wird bei der bekannten Anordnung die Kommutierungsfrequenz aus den Spitzenwerten des Motorstroms abgeleitet, die bereits für sich starken Störungen und Schwankungen unterworfen sein können und somit kein absolut zuverlässiges Maß für die Belastung des Motors darstellt.

Aus der DE 37 09 168 A1 ist eine Schaltungsanordnung zum Betreiben eines mehrphasigen Synchronmotors an einem Gleichspannungsnetz bekannt. Diese Schaltungsanordnung weist eine Schaltvorrichtung zum sukzessiven Anschließen der einzelnen Wicklungsphasen der Ankerwicklung des Motors an die Netzgleichspannung, einen Schaltsignalgenerator zum Erzeugen von Schaltsignalen für die Schaltvorrichtung und eine Logikstufe zum folgerichtigen Belegen der Schaltvorrichtung mit den Schaltsignalen auf. Zwecks Vereinfachung der Schaltungsanordnung unter Verzicht auf einen Rotorstellungssensor ist der Schaltsignalgenerator aus einem Spannungs-Frequenz-Wandler, einem Anlaufglied und einer nach Hochlaufen des Motors wirksamen Wiederanlaufeinheit aufgebaut. Der Spannungs-Frequenz-Wandler generiert eine Rechteckimpulsfolge mit einer von seiner Eingangsspannung abhängigen Impulsfolgefrequenz, die durch das gestartete Anlaufglied von Null auf einen Vorgabewert anwächst. Das Anlaufglied wird mit Einschalten der Netzgleichspannung und durch die Wiederanlaufeinheit dann gestartet, wenn der Motorstrom einen Vorgabewert überschreitet.

Bei dieser Schaltungsanordnung folgt die Motordrehzahl einer durch eine feste Spannung unabhängig von der Belastung und dem Betriebszustand des Motors vorgegebenen Frequenz. Fällt die Motordrehzahl mit dieser Frequenz außer Tritt, wird dieser Betriebszustand durch ein Ansteigen des Motorstroms über einen vorgegebenen Grenzwert hinaus detektiert. Es wird dann nach einem vorgegebenen Zeitverlauf eine allmählich von einem niedrigen Wert zum Endwert ansteigende Frequenz vorgegeben, um dem Motor Gelegenheit zum Wiederanlaufen zu geben. Eine Regelung nach dem gemessenen Motorstrom erfolgt nicht.

Aus der DE 37 12 185 ist eine Laststromerfassungseinrichtung für Stromrichter mit Pulsdauermodulation bekannt. Ein solcher Stromrichter weist mehrere Arme parallel zu einer Gleichspannugsquelle auf. Jeder Arm ist von einem oberen Arm und einem unteren Arm gebildet, die jeweils ein Schaltelement aufweisen. Den Schaltelementen jeweils des oberen Arms und des unteren Arms werden kontinuierlich und abwechselnd Schaltsteuersignale zugeführt. Nebenschlußwiderstände sind zwischen einem Minusanschluß der Gleichspannungsquelle und den Schaltelementen der unteren Arme eingeschaltet. Der Stromrichter weist außerdem eine Strom-Sollschwingungsformgeneratorschaltung, die Führungswerte für die zur Einspeisung in eine Last gewünschten Stromsignalformen erzeugt, einen Trägerschwingungsgenerator und Abtast- und Halteschaltungen auf. Jede der Abtastund Halteschaltungen tastet eine an dem jeweiligen Nebenschlußwiderstand abfallende Spannung synchron mit der Periode der von dem Trägerschwingungsgenerator erzeugten Trägerschwingung an einem bestimmten Zeitpunkt während der Zeitdauer, während der das zugeordnete Schaltelement leitend ist, ab und hält diese Spannung. Dazu ist eine Bezugswertsignalgeneratorschaltung vorgesehen, die ein Bezugswertsignal liefert. Dieses wird in einer Vergleicherschaltung mit dem Ausgangssignal des Trägerschwingungsgenerators verglichen. Übersteigt das Ausgangssignal des Trägerschwingungsgenerators das Ausgangssignal der Bezugswertsignalgeneratorschaltung, d.h. das Bezugswertsignal, werden die abgetasteten Signale in den Abtast- und Halteschaltungen gehalten.

In der aus der DE 37 12 185 A1 bekannten Einrichtung werden somit die Ströme in den einzelnen Armen des Stromrichters gesondert gemessen und durch eine mehrfache Regelschleife je einer Strom-Sollschwingungsform für jeden Arm gesondert nachgeführt. Auch diese Einrichtung erfordert einen hohen Schaltungsaufwand.

Aus dem europäischen Patent 231 046 ist eine Kommutierungsschaltung für einen kollektorlosen Gleichstrommotor ohne Kommutierungssensor bekannt, der einen Ständer mit einem Mehrphasensystem und einen dauermagnetischen Läufer aufweist.

Der Kommutierungszustand des Motors wird in Abhängigkeit der in die Ständerwicklungen induzierten Spannungen vorgenommen. Es wird ein Vergleichssignal erzeugt, das angibt, ob das Vorzeichen derjenigen Wicklungsspannung, die nicht mittels der elektronischen Schaltelemente an die Gleichstromquelle geschaltet ist, mit einem in Abhängigkeit vom jeweiligen Kommutierungszustand vorgegebenen Vorzeichen übereinstimmt. Dieses Vergleichssignal wird während der Zeiten ausgeblendet, in denen in den Wicklungen durch Abschalten der elektronischen Schaltelemente bedingte Ausgleichsvorgänge mit möglichen parasitären Nullstellen auftreten. Die Schaltelemente werden immer dann einen Kommutierungsschritt weitergeschaltet, wenn das Vergleichssignal nicht übereinstimmende Vorzeichen angibt. Die spannungsabhängige Kommutierung stellt eine Alternative zur stromabhängigen Kommutierung dar, die jedoch nicht immer gewünscht wird.

*Aus Patent Abstracts of Japan, vol. 015, no. 091 (P-1175), 5. März 1991, und JP 02 307070 A (Mitsubishi Electric Corp.), 20. Dezember 1990, ist ein Stromdetektionsverfahren eines PWM-(Pulsweitenmodulations-)Inverters bekannt. Dieses dient dazu, eine Stromdetektion zu ermöglichen die nicht durch Pulsieren beeinträchtigt wird. Dies wird dadurch erreicht, daß die Detektionsperiode des Ausgangsstromes des PWM-Inverters nahe an einen Zeitpunkt gesetzt wird, der um eine bestimmte Zeit gegenüber dem Zeitpunkt verzögert ist, in dem ein Trägersignal seine größte Amplitude erreicht. Der Detektionszeitpunkt des Ausgangsstromes des PWM-Inverters, der durch ein pulsweitenmoduliertes Signal gesteuert ist, welches erhalten wird durch Vergleichen eines Ausgangsspannungs-Steuersignals oder eines Modulationssignals mit einem Dreieck-Trägersignal, ist dazu in die Nähe des Zeitpunktes gesetzt, welcher gegenüber dem* *Zeitpunkt, zu dem das Dreieck-Trägersignal seine Maximalamplitude erreicht, um eine Zeitspanne verzögert ist, die halb so lang ist wie die gesamte Zeitdauer der Einschaltverzögerungszeit von als Schalterelemente des PWM-Inverters eingesetzten Treibertransistoren, ihrer Ausschaltverzögerungszeit und einer Kurzschlußvermeidungszeitspanne des oberen und des unteren Zweiges des PWM-Inverters. Folglich wird der Stromwert nahezu in der Mitte zwischen Wendepunkten einer Impulskomponente im Ausgangsstrom des PWM-Inverters detektiert und kann nahezu die Grundkomponente des Ausgangsstromes des PWM-Inverters detektiert werden.*

Die Erfindung hat die Aufgabe, eine Schaltungsanordnung zum Speisen eines Elektromotors zu schaffen, die eine vom Motorstrom abhängige Kommutierung ohne Positionselemente ermöglicht, die mit geringem Schaltungsaufwand betriebssicher für alle Betriebszustände des Motors, insbesondere alle Drehzahlen, ausgebildet ist.

Erfindungsgemäß wird diese Aufgabe bei einer Schaltungsanordnung der gattungsgemäßen Art dadurch gelöst, daß mit der Meßimpedanz ein Eingang einer Abtast- und Halteschaltung gekoppelt ist zum Abtasten einer an der Meßimpedanz auftretenden Meßspannung und daß die Abtast- und Halteschaltung durch die Ringzählvorrichtung in jeder ihrer Perioden zu einem vorgebbaren Zeitpunkt außerhalb der Zeitintervalle für das Umsteuern der Schalterelemente der Kommutierungsschaltung zum Aufnehmen eines Abtastwertes der Meßspannung angesteuert wird.

Der Erfindung liegt die Erkenntnis zugrunde, daß anstelle eines gegebenenfalls schwierig zu gewinnenden Mittelwertes des Motorstromes auch ein zu einem geeignet gewählten Zeitpunkt abgetasteter Augenblickswert des Motorstromes eine Aussage über die Belastung des Motors liefern kann. Es zeigt sich, daß der Motorstrom an den Kommutierungspunkten, d.h. zu den Zeitpunkten, an denen die Schalterelemente der Kommutierungszweige umgeschaltet werden, wegen der durch diese Schaltvorgänge in den Wicklungen des Elektromotors auftretenden Vorgänge und aufgrund von Unsymmetrien in der Kommutierungsschaltung keine verläßliche Aussage über die Belastung des Motors geben kann und somit an diesen Zeitpunkten nicht gemessen werden darf. Außerhalb des zeitlichen Einflußbereichs der genannten Störfaktoren läßt sich jedoch ein Augenblickswert des Motorstromes finden, der wenigstens nahezu proportional zur Belastung des Motors ist. Ein guter Abtastzeitpunkt, an dem der Augenblickswert des Motorstromes die vorstehenden Forderungen erfüllt, liegt in der Mitte eines Kommutierungsintervalls. Dort haben Umschalt- und Ausgleichsvorgänge keinen Einfluß, d.h. die Zeitintervalle für das Umsteuern der Schalterelemente der Kommutierungsschaltung erstrecken sich nicht auf diese Abtastzeitpunkte.

Die Kommutierung eines Gleichstrommotors mit der erfindungsgemäßen Schaltungsanordnung, die keine Mittelwertbildung mehr erforderlich macht, ermöglicht demgegenüber erst die Anwendung bestimmter Steuerungsformen für den Gleichstrommotor. Insbesondere ist eine einfache Möglichkeit zum Synchronisieren des Gleichstrommotors gegeben.

Eine besonders einfache Schaltungsanordnung für die Bestimmung der genannten Abtastzeitpunkte wird dadurch erhalten, daß die Ringzählvorrichtung als Schieberegister ausgebildet ist und eine Anzahl von Registerzellen aufweist, die wenigstens der doppelten Anzahl der Schalterelemente der Kommutierungsschaltung entspricht. Werden doppelt so viele Registerzellen wie Schalterelemente gewählt, können die Abtastzeitpunkte durch einfache Auswahl, von welcher der Registerzellen die Abtastung ausgelöst werden soll, auf die Mitte zwischen je zwei Kommutierungszeitpunkten gelegt werden. Diese Kommutierungszeitpunkte stellen den Beginn der Zeitintervalle für das Umsteuern der Schalterelemente dar. Wird eine höhere Anzahl von Registerzellen gewählt, können die Abtastzeitpunkte, d.h. die Zeitpunkte zum Aufnehmen eines Abtastwertes der Meßspannung, ohne großen Schaltungsaufwand auch auf einen anderen Zeipunkt zwischen je zwei Kommutierungszeitpunkten festgelegt werden.

Vorzugsweise entspricht dabei ein Zeitraum zwischen je zwei aufeinander folgenden Umsteuervorgängen der Schalterelemente der Kommutierungsschaltung, d.h. ein Zeitraum zwischen je zwei aufeinander folgenden Kommutierungszeitpunkten, wenigstens zwei Perioden des Taktsignals, und das Ansteuern der Abtast- und Halteschaltung wird durch eine Flanke des Taktsignals innerhalb des genannten Zeitraumes ausgelöst. Dabei ist in der allgemeinsten Bauform der Ringzählvorrichtung jede n-te ihrer Registerzellen mit einem der Schalterelemente der Kommutierungsschaltung verbunden, wobei n der Quotient aus der Anzahl aller Registerzellen der Ringzählvorrichtung und der Anzahl der Schalterelemente ist. Ein Abtastsignal zum Auslösen eines Abtastvorgangs in der Abtast- und Halteschaltung wird aus einer Registerzelle abgeleitet, die sich im Schieberegister zwischen zwei aufeinander folgenden, mit je einem der Schalterelemente der Kommutierungsschaltung verbundenen Registerzellen befindet.

Zum Ableiten eines impulsförmigen Abtastsignals aus der Ringzählvorrichtung enthält die erfindungsgemäße Schaltungsanordnung vorzugsweise eine Impulsformstufe. Das Abtastsignal erhält dadurch einen von dem Betriebszustand des Elektromotors unabhängigen zeitlichen Verlauf.

In vorteilhafter Weise kann die erfindungsgemäße Schaltungsanordnung mit nur geringem Aufwand mit einer Eingabeschaltung zum Speichern wenigstens einer vorgebbaren Signalfolge und zum Eingeben dieser Signalfolge, vorzugsweise zum einmaligen Eingeben dieser Signalfolge in die Ringzählvorrichtung bei Inbetriebnahme der Schaltungsanordnung ausgestattet sein. Beim Einschalten des Elektromotors können aus einer derartigen Eingabeschaltung in die Ringzählvorrichtung unterschiedlich vorgebbare Signalfolgen, d.h. unterschiedliche Schaltzustandsmuster für die Registerzellen der Ringzählvorrichtung, eingespeist werden, durch die ein Betrieb mit unterschiedlichem Kommutierungsverhalten des Elektromotors möglich ist. Insbesondere kann dadurch der Stromflußwinkel für die Wicklungen des Elektromotors vorgewählt werden.

Die erfindungsgemäße Schaltungsanordnung kann in einfacher Weise auch für eine Drehzahlregelung des angeschlossenen Elektromotors eingesetzt werden. Dazu enthält in einer Weiterbildung der Erfindung die Abtast- und Halteschaltung mit einer Regelstufe zum Regeln der Drehzahl des Elektromotors auf einen vorgebbaren Wert verbunden, der der Regelstufe als Strom-Sollwert zuführbar ist. Die Regelstufe enthält eine Vergleichsanordnung zum Bilden eines Vergleichssignals durch Vergleichen des Strom-Sollwertes mit den Abtastwerten der Meßspannung. Das Vergleichssignal wird zum Ableiten des Taktsignals der Taktfrequenz-Erzeugungsstufe zugeführt.

Die erfindungsgemäße Schaltungsanordnung ist bevorzugt für einfach aufgebaute elektrische Antriebe mit elektronisch kommutierten Elektromotoren einsetzbar. Ein bevorzugtes Anwendungsgebiet derartiger Elektromotoren sind Haushaltsgeräte, beispielsweise Elektrorasierer.

Die Zeichnung, in der übereinstimmende Elemente mit denselben Bezugszeichen versehen sind, zeigt in
Fig. 1 eine blockschematische Darstellung eines ersten Ausführungsbeispiels der Erfindung,
Fig. 2 eine blockschematische Darstellung eines zweiten Ausführungsbeispiels der Erfindung,
Fig. 3 eine Abwandlung des Ausführungsbeispiels nach Fig. 2 und
Fig. 4 ein drittes Ausführungsbeispiel der Erfindung.

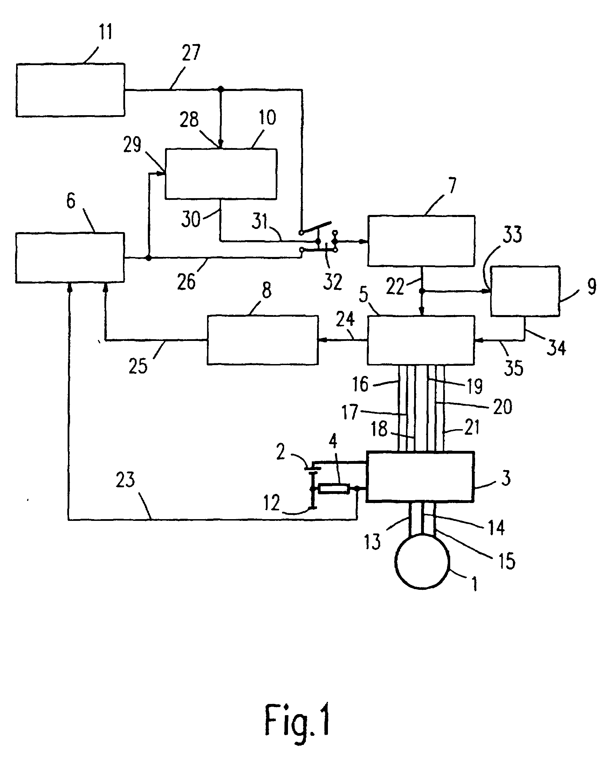

Die blockschematische Darstellung des ersten Ausführungsbeispiels der Erfindung nach Fig. 1 umfaßt einen beispielshalber mit drei Wicklungen ausgebildeten Elektromotor 1, der aus einer Gleichspannungsquelle 2, beispielshalber einer Batterie oder einem Akkumulator, gespeist wird und dazu mit dieser über eine Kommutierungsschaltung 3 verbunden ist. Dabei sind die Schaltungselemente und Leitungsverbindungen, die der Energieversorgung des Elektromotors 1 dienen, mit stärkeren Volllinien gegenüber den Schaltungselementen und Verbindungen hervorgehoben, die der Signal-, d.h. der Informationsübertragung, in der erfindungsgemäßen Schaltungsanordnung dienen. In eine der Verbindungen zwischen der Gleichspannungsquelle 2 und der Kommutierungsschaltung 3 ist eine Meßimpedanz 4, vorzugsweise ein ohmscher Widerstand mit geringem Widerstandswert, eingefügt. Ein Verbindungspunkt zwischen der Gleichspannungsquelle 2 und der Meßimpedanz 4 ist an Masse 12 angeschlossen.

Durch die Kommutierungsschaltung 3 können die Wicklungsanschlüsse 13, 14 bzw. 15 des Elektromotors 1 wahlweise mit dem ersten Anschluß der Gleichspannungsquelle - hier Pluspol der Batterie - oder über die Meßimpedanz 4 mit dem zweiten Anschluß der Gleichspannungsquelle - hier Minuspol - verbunden werden. Im Betrieb des Elektromotors geschieht dies zu vorgegebenen Zeitpunkten bzw. in vorgegebenen Zeitintervallen in einer Weise, daß dadurch der Anker des Elektromotors in Drehung versetzt wird.

Zur Steuerung der für diese Kommutierung des Elektromotors 1 notwendigen Schaltvorgänge ist die Kommutierungsschaltung 3 über Schaltleitungen 16 bis 21 mit einer Ringzählvorrichtung 5 verbunden. Der Ringzählvorrichtung 5 wird von einer Taktfrequenz-Erzeugungsstufe 7 ein Taktsignal zugeführt, durch welches eine vorgebbare Signalfolge in der Ringzählvorrichtung 5 umlaufend getaktet wird. Eine Periode der Ringzählvorrichtung 5 entspricht dabei einem vollständigen Umlauf der genannten Signalfolge in der Ringzählvorrichtung 5 bzw. einer Umdrehung des Rotors des Elektromotors 1. Das Taktsignal wird von der Taktfrequenz-Erzeugungsstufe 7 über eine Taktleitung 22 an die Ringzählvorrichtung 5 übertragen.

Das Ausführungsbeispiel nach Fig. 1 umfaßt weiterhin eine Abtast- und Halteschaltung 6, die über eine Meßwertleitung 23 mit dem der Verbindung mit Masse 12 abgewandten Anschluß der Meßimpedanz 4 verbunden ist. Über die Meßwertleitung 23 wird die an der Meßimpedanz 4 auftretende Meßspannung der Abtast- und Halteschaltung 6 zugeleitet. Die Abtast- und Halteschaltung 6 ist ferner über eine Impulsformstufe 8 mit der Ringzählvorrichtung 5 verbunden. Wie im nachfolgenden noch näher erläutert werden wird, wird dabei über eine Leitung 24 der Ringzählvorrichtung 5 an geeigneter Position ein mit den Signalen auf den Schaltleitungen 16 bis 21 bzw. mit dem Signal auf der Taktleitung 22 korreliertes Signal abgegriffen. Aus diesem Signal wird in der Impulsformstufe 8 ein impulsförmiges Abtastsignal geformt und über eine Abtastsignalleitung 25 an die Abtast- und Halteschaltung 6 weitergeleitet. Beim Auftreten eines Impulses in diesem Abtastsignal wird der Augenblickswert der Meßspannung auf der Meßwertleitung 23 in der Abtast- und Halteschaltung 6 abgetastet und für die weitere Auswertung gespeichert.

Der in der Abtast- und Halteschaltung 6 gespeicherte Wert der Meßspannung wird über eine weitere Leitung 26 der Taktfrequenz-Erzeugungsstufe 7 zugeleitet, um darin die Taktfrequenz in Abhängigkeit vom Wert der Meßspannung zu steuern. Durch die Leitung 26 wird eine Regelschleife zur Kommutierung des Elektromotors 1 geschlossen.

Zum Regeln der Drehzahl des Elektromotors 1 auf einen vorgebbaren Sollwert ist die Schaltungsanordnung nach Fig. 1 weiterhin mit einem Sollwertsteller 11 ausgestattet, von dem ein Strom-Sollwert - vorzugsweise in Form einer Gleichspannung - abgebbar ist. Dieser Strom-Sollwert gelangt über eine Leitung auf einen Sollwerteingang 28 einer Vergleichsanordnung 10, deren Istwerteingang 29 die in der Abtast- und Halteschaltung 6 gespeicherte Meßspannung von der Leitung 26 zugeführt wird. Vom Ausgang 30 der Vergleichsanordnung 10 wird ein Umschaltsignal, welches einen dem Vergleichsergebnis entsprechenden Wert annimmt, einem Stelleingang 31 einer Umschaltstufe 32 zugeleitet. Die Umschaltstufe 32 wird entsprechend dem Signal an ihrem Stelleingang 31 derart umgeschaltet, daß der Taktfrequenz-Erzeugungsstufe 7 wahlweise der Strom-Sollwert über die Leitung 27 bzw. die Meßspannung über die Leitung 26 zugeführt werden. So lange die Meßspannung auf der Leitung 26 einen größeren Wert annimmt als der Strom-Sollwert (bzw. die ihn repräsentierende Gleichspannung) auf der Leitung 27, befindet sich die Umschaltstufe 32 in der in Fig. 1 dargestellten Schaltposition, in der die Verbindung zwischen der Abtast- und Halteschaltung 6 und der Taktfrequenz-Erzeugungsstufe 7 hergestellt ist.

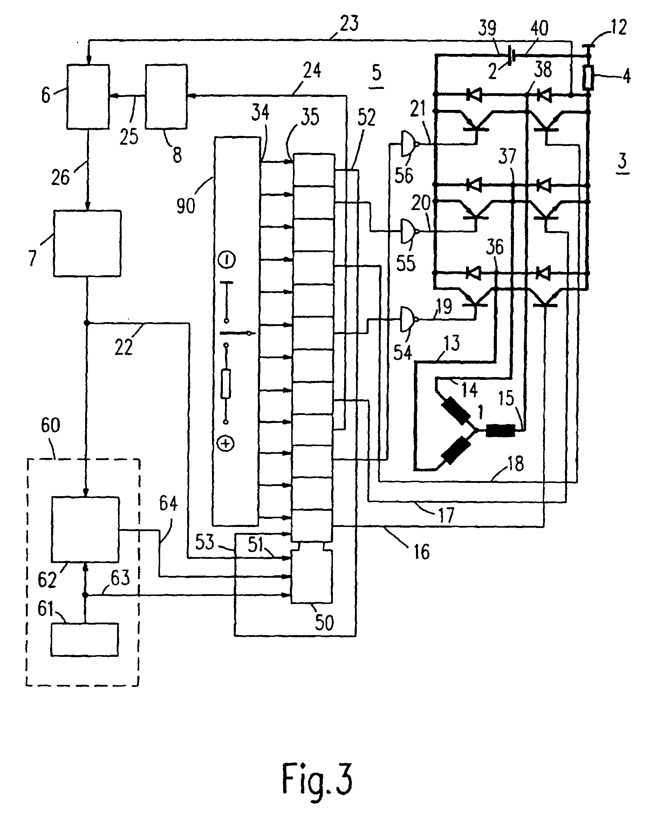

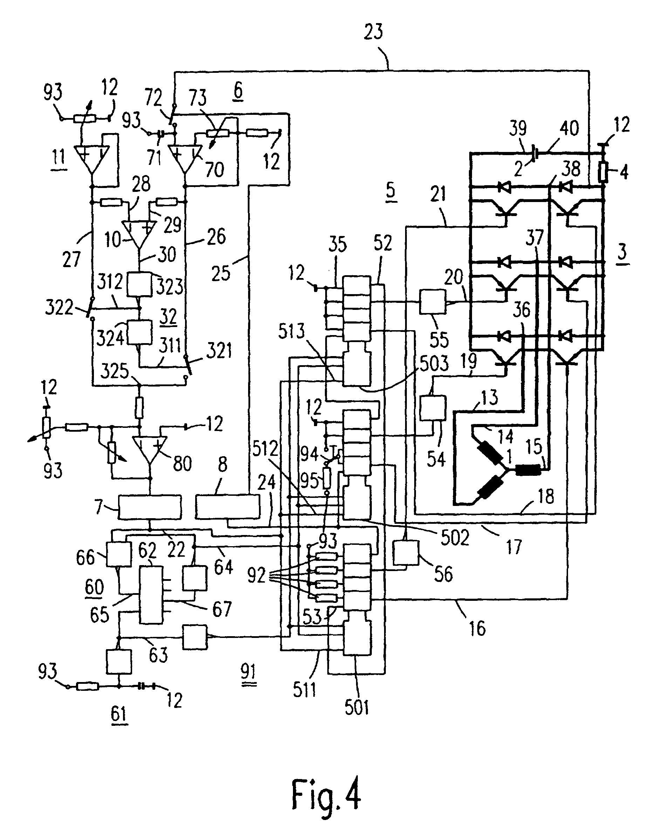

Die Schaltungsanordnung nach Fig. 1 enthält weiterhin eine Eingabeschaltung 9, der an einem Eingang 33 das Signal von der Taktleitung 22 zugeführt wird und deren Ausgang 34 an einen weiteren Eingang 35 der Ringzählvorrichtung 5 angeschlossen ist. In der Eingabeschaltung ist wenigstens eine vorgebbare Signalfolge gespeichert. Bei Inbetriebnahme der Schaltungsanordnung, d.h. Beginn der Energiezufuhr zum Starten des Elektromotors 1, wird diese Signalfolge mit Hilfe des Signals auf der Taktleitung 22 in die Ringzählvorrichtung 5 geladen. Durch wahlweises Laden unterschiedlicher, in der Eingabeschaltung 9 gespeicherter Signalfolgen können unterschiedliche Drehmoment-Drehzahl-Abhängigkeiten für den Betrieb des Elektromotors 1 vorgegeben werden. Dies wird in den Ausführungsbeispielen der Fig. 3 und 4 näher erläutert.

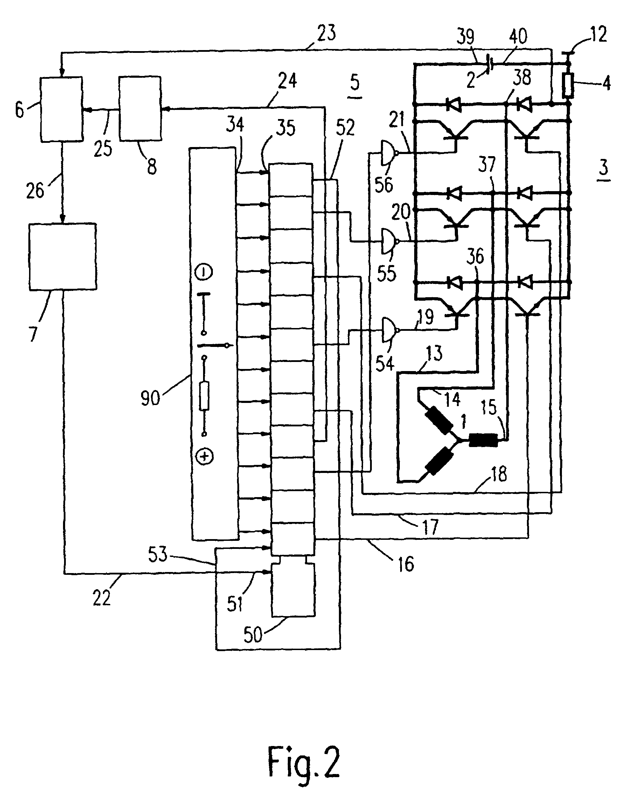

Fig. 2 zeigt ein weiteres Ausführungsbeispiel der erfindungsgemäßen Schaltungsanordnungen, in welchem die Kommutierungsschaltung 3 und die Ringzählvorrichtung 5 in detaillierterer Form dargestellt sind. Zur Vereinfachung der Darstellung enthält das Ausführungsbeispiel der Fig. 2 keine Regelstufe 10, 11, 32, und die Eingabeschaltung mit dem Bezugszeichen 90 in Fig. 2 ist vereinfacht wiedergegeben.

Die Kommutierungsschaltung 3 nach Fig. 2 weist zu jedem der Wicklungsanschlüsse 13, 14, 15 des Elektromotors 1 einen Kommutierungszweig 36, 37 bzw. 38 auf. Jeder der Kommutierungszweige 36, 37 bzw. 38 ist zwischen einem ersten Anschluß 39 der Gleichspannungsquelle 2 - hier dem Pluspol - und über die Meßimpedanz 4 mit dem zweiten Anschluß 40 der Gleichspannungsquelle 2 - hier dem Minuspol - sowie Masse 12 verbunden. Jeder der Kommutierungszweige 36, 37, 38 umfaßt ein erstes Schalterelement, durch das der Wicklungsanschluß 13, 14 bzw. 15 mit dem ersten Anschluß 39 der Gleichspannungsquelle 2 verbunden werden kann. Jedes dieser ersten Schalterelemente der Kommutierungszweige 36, 37, 38 umfaßt die Parallelschaltung eines pnp-Transistors mit einer Freilaufdiode. Entsprechend enthalten die Kommutierungszweige 36, 37, 38 je ein zweites Schalterelement zum Verbinden der Wicklungsanschlüsse 13, 14 bzw. 15 mit dem zweiten Anschluß 40 der Gleichspannungsquelle 2 über die Meßimpedanz 4, wobei diese zweiten Schalterelemente je die Parallelschaltung eines npn-Transistors mit einer weiteren Freilaufdiode umfassen.

Die Ringzählvorrichtung 5 in Fig. 2 ist mit einem Schieberegister 50 ausgebildet, das eine Anzahl von Registerzellen aufweist, die der doppelten Anzahl der Schalterelemente der Kommutierungsschaltung 3 entspricht, d.h. es sind zwölf Registerzellen vorhanden. Eine in diesen Registerzellen gespeicherte Signalfolge wird durch ein Taktsignal an einem gemeinsamen Taktsignaleingang 51 in den Registerzellen umlaufend getaktet, wozu ein Ausgang 52 der letzten der Registerzellen mit einem Eingang 53 der ersten der Registerzellen verbunden ist. Der Taktsignaleingang 51 des Schieberegisters 50 ist mit der Taktleitung 22 verbunden. Somit wird die Signalfolge im Schieberegister 50 durch das aus dem Motorstrom gewonnene Taktsignal getaktet.

In Fig. 2 ist weiterhin eine einfache Ausführungsform einer Eingabeschaltung mit dem Bezugszeichen 90 dargestellt. Der Ausgang 34 der Eingabeschaltung 90 in Fig. 2 umfaßt zu jeder der Registerzellen eine Verbindung zum Schieberegister 50; entsprechend umfaßt das Schieberegister 50 zu jeder seiner Registerzellen einen Anschluß des Eingangs 35. In der Eingabeschaltung 90 ist für jede Schieberegisterzelle gesondert ein binärer Signalwert entsprechend einem der möglichen Schaltzustände der Registerzellen des Schieberegisters 50 vorgebbar. Dies ist durch die schematische Darstellung eines mechanischen Umschalters zwischen positivem und negativem Potential (Masse) angedeutet. Die wählbare Signalfolge kann von der Eingabeschaltung 90 in das Schieberegister 50 geladen werden. Auf diese Weise können unterschiedliche Kommutierungsfolgen für den Elektromotor 1 eingestellt werden, die zu unterschiedlichen Drehmoment-Drehzahl-Abhängigkeiten führen. Somit sind die Betriebsarten des Elektromotors 1 durch das Einstellen verschiedener Signalfolgen variabel.

Im Schieberegister 50 ist jede zweite der Registerzellen mit einem Ausgang an eine der Schaltleitungen 16 bis 21 angeschlossen. Insbesondere ist ein Ausgang der ersten Registerzelle an die Schaltleitung 16 für das zweite Schalterelement des Kommutierungszweiges 36 angeschlossen. Ein Ausgang der fünften Registerzelle führt an die Schaltleitung 17 für das zweite Schalterelement des Kommutierungszweiges 37, ein Ausgang der neunten Registerzelle ist an die Schaltleitung 18 für das zweite Schalterelement des Kommutierungszweiges 38 angeschlossen. Weiterhin ist ein Ausgang der siebten Registerzelle mit einem ersten Inverter 54, ein Ausgang der elften Registerzelle mit einem zweiten Inverter 55 und ein Ausgang der dritten Registerzelle mit einem dritten Inverter 56 verbunden. Ausgänge der ersten, zweiten und dritten Inverters 54, 55, 56 sind an die ersten Schalterelemente der Kommutierungszweige 36, 37 bzw. 38 geführt. Auf diese Weise werden die Signale von den Ausgängen der Registerzellen unmittelbar den zweiten Schalterelementen und in invertierter Form den ersten Schalterelementen der Kommutierungsschaltung 3 zugeleitet. In dieser Bauform des Schieberegisters 50 entspricht weiterhin ein Zeitraum zwischen je zwei aufeinander folgenden Umsteuervorgängen der Schalterelemente der Kommutierungsschaltung 3 zwei Perioden des Taktsignals auf der Taktleitung 22.

Von der vierten Registerzelle des Schieberegisters 50 ist ein Ausgang mit der Leitung 24 verbunden, die an die Impulsformstufe 8 führt. Somit wird von der vierten Registerzelle ein Abtastsignal abgeleitet und über die Abtastsignalleitung 25 der Abtast- und Halteschaltung 6 zugeführt. Das Ansteuern der Abtast- und Halteschaltung 6 wird auf diese Weise durch eine Flanke des Taktsignals innerhalb eines Zeitraums zwischen je zwei aufeinander folgenden Umsteuervorgängen der Schalterelemente der Kommutierungsschaltung 3 ausgelöst.

Die Kommutierung des Elektromotors 1 kann dadurch verfeinert bzw. weiter variiert werden, daß die Anzahl der Registerzellen des Schieberegisters 50 dem n-fachen der Anzahl der Schalterelemente entspricht, wobei n eine ganze Zahl größer als 2 ist. Mit anderen Worten ist dann n der Quotient aus der Anzahl der Registerzellen und der Anzahl der Schalterelemente, und jede n-te Registerzelle der Ringzählvorrichtung 5 ist mit einem der Schalterelemente der Kommutierungsschaltung 3 verbunden. Das Abtastsignal zum Auslösen eines Abtastvorgangs in der Abtast- und Halteschaltung 6 wird dann aus einer der Registerzellen abgeleitet, die sich im Schieberegister zwischen zwei aufeinander folgenden der mit je einem der Schalterelemente der Kommutierungsschaltung 3 verbundenen Registerzellen befinden. Bei einer derartigen Erweiterung des Schieberegisters kann der Zeitpunkt für den Abtastvorgang zwischen zwei Umsteuervorgängen der Schalterelemente der Kommutierungsschaltung 3 unterschiedlich gewählt und somit gegebenenfalls den in der Kommutierungsschaltung auftretenden Betriebsabläufen angepaßt werden.

Fig. 3 zeigt eine Variation des Ausführungsbeispiels nach Fig. 2, bei der die Eingabeschaltung 90 durch eine Startschaltung 60 ergänzt ist. In einer Eingabeschaltung 9 gemäß Fig. 1 könnten bevorzugt die Eingabeschaltung 90 der Fig. 2 und 3 gemeinsam mit der Startschaltung 60 enthalten sein. Die Startschaltung 60 dient der Steuerung der Eingabe der vorgebbaren Signalfolge in das Schieberegister 50 bei Inbetriebnahme des Elektromotors 1 bzw. der diesen steuernden Schaltungsanordnung nach Fig. 3. Die Startschaltung 60 umfaßt dazu einen Einschalt-Rücksetz-Generator 61 und eine Zählvorrichtung 62. Der Einschalt-Rücksetz-Generator 61 gibt beim Einschalten der Energiezufuhr einmalig einen Einschalt-Rücksetzimpuls ab und ist während der übrigen Betriebsdauer der Schaltungsanordnung ohne weitere Wirkung. Über eine Rücksetzleitung 63 wird mit diesem Einschalt-Rücksetzimpuls sowohl das Schieberegister 50 als auch die Zählvorrichtung 62 in einen Anfangszustand zurückgesetzt.

Durch das Einschalten der Energieversorgung auch an die übrigen Teile der dargestellten Schaltungsanordnung, insbesondere auch an die Taktfrequenz-Erzeugungsstufe 7 und die Kommutierungsschaltung 3, wird die Schaltungsanordnung insoweit in Betrieb gesetzt, als die Taktfrequenz-Erzeugungsstufe 7 über die Taktleitung 22 Taktimpulse abgibt. Durch diese Taktimpulse, die über eine Verbindung mit der Taktleitung 22 an die Zählvorrichtung 62 gelangen, wird die Zählvorrichtung 62 aus ihrem Anfangszustand in einen vorgebbaren Zähl-Endzustand getaktet und in diesem für die weitere Dauer des Betriebs des Elektromotors festgehalten. Bei Erreichen des Zähl-Endzustands wird von der Zählvorrichtung 62 über eine Eingabesteuerleitung 64 ein Eingabesignal an das Schieberegister 50 gegeben, durch das die in der Eingabeschaltung 90 vorgegebene Signalfolge über den Eingang 35 in das Schieberegister 50 geladen wird. Mit den weiteren Taktimpulsen auf der Taktleitung 22 wird dann diese vorgegebene Signalfolge im Schieberegister 50 ringförmig umzulaufen beginnen und die gewünschte Kommutierung des Elektromotors 1 bewirken.

In Fig. 4 ist ein detaillierteres Ausführungsbeispiel der erfindungsgemäßen Schaltungsanordnung dargestellt. Darin umfaßt die Ringzählvorrichtung 5 drei Schieberegister 501, 502, 503 mit je einem Drittel der Gesamtanzahl der Registerzellen. Die Registerzellen aller Schieberegister 501, 502, 503 sind für das Umlaufen der vorgegebenen Signalfolge in der gleichen Weise in Reihe geschaltet wie die Registerzellen des Schieberegisters 50 der Ausführungsbeispiele nach Fig. 2 oder 3. Insoweit ist die Zusammenschaltung der Schieberegister 501, 502, 503 wirkungsgleich mit dem Schieberegister 50. Über Taktsignaleingänge 511, 512 bzw. 513 werden die Schieberegister 501, 502, 503 synchron aus der Taktleitung 22 getaktet.

Das Ausführungsbeispiel nach Fig. 4 umfaßt eine Eingabeschaltung 91, in der einerseits die Startschaltung 60 und andererseits eine vereinfachte Ausführungsform der in den Fig. 2 und 3 mit dem Bezugszeichen 90 bezeichneten Eingabeschaltung enthalten ist. Diese vereinfacht ausgestaltete Eingabeschaltung 91 der Fig. 4 ist für die wahlweise Vorgabe zweier unterschiedlicher Signalfolgen in die Schieberegister 501, 502, 503 eingerichtet. Dazu sind die Anschlüsse des Eingangs 35 der Ringzählvorrichtung 5 für die einzelnen Registerzellen in der folgenden Weise verbunden:
Die Anschlüsse für das erste Schieberegister 501 sind über Vorwiderstände 92 mit einem positiven Speisespannungsanschluß 93 verbunden; entsprechend sind die Anschlüsse des Eingangs 35 für das dritte Schieberegister 503 unmittelbar mit Masse 12 verbunden; die Anschlüsse des Eingangs 35 der letzten beiden Registerzellen des zweiten Schieberegisters 502 sind ebenfalls fest mit Masse 12 verbunden; die Anschlüsse des Eingangs 35 für die ersten beiden Registerzellen des zweiten Schieberegisters 502 sind miteinander und mit einem Umschalter 94 verbunden, durch den sie wahlweise mit Masse 12 oder über einen Vorwiderstand 95 mit dem positiven Speisespannungsanschluß 93 verbunden werden können. Durch das Umschalten mittels des Umschalters 94 werden die beiden unterschiedlichen Signalfolgen eingestellt.

Der Einschalt-Rücksetz-Generator 61 in der Startschaltung 60 innerhalb der Eingabeschaltung 91 umfaßt eine Reihenschaltung eines Widerstandes und eines Kondensators zwischen dem positiven Speisespannungsanschluß 93 und Masse 12. Vereinfachend ist im vorliegenden Ausführungsbeispiel der Einschalt-Rücksetzgenerator 61 mit demselben positiven Speisespannungsanschluß 93 verbunden wie die Vorwiderstände 92, 95. Letztere können auch mit einem aus der Spannung des positiven Speisespannungsanschlusses 93 abgeleiteten Referenzpotential verbunden sein. Dies gilt auch für die weiteren, im nachfolgenden noch erläuterten Anschlüsse an den positiven Speisespannungsanschluß 93.

Eine Anzapfung zwischen dem Widerstand und dem Kondensator im Einschalt-Rücksetz-Generator 61 ist über einen Inverter mit der Rücksetzleitung 63 verbunden. Auf diese Weise nimmt bei Inbetriebnahme der Schaltungsanordnung das Potential auf der Rücksetzleitung 63 zunächst einen hohen und nach Umladung des Kondensators dauerhaft einen niedrigen Wert an.

Die Zählvorrichtung 62 ist mit ihrem Rücksetzeingang an die Rücksetzleitung 63 und mit einem Zähleingang 65 an den Ausgang eines NAND-Gatters 66 angeschlossen. Ein Eingang des NAND-Gatters 66 ist mit der Taktleitung 22 verbunden, ein weiterer Eingang des NAND-Gatters 66 ist an die Eingabesteuerleitung 64 angeschlossen. Diese wiederum ist über einen Inverter an einen Zählausgang 67 der Zählvorrichtung 22 angeschlossen, an dem bei einer vorgegebenen Zählerstellung der Zählvorrichtung 62 ein positives Spannungspotential auftritt.

Bei Inbetriebnahme der Schaltungsanordnung wird die Zählvorrichtung 62 zunächst vom Einschalt-Rücksetz-Generator 61 zurückgesetzt und dann durch Impulse auf der Taktleitung 22 bis zu der Zählerstellung getaktet, bei der der Zählausgang 67 sein Spannungspotential wechselt. Dadurch wird über das NAND-Gatter 66 ein weiteres Fortschalten der Zählvorrichtung 62 unterbunden. Gleichzeitig wird das Eingabesignal auf der Eingabesteuerleitung gebildet und an die Schieberegister 501, 502, 503 gegeben. In deren Registerzellen werden daraufhin die gemäß der gewählten Signalfolge vorgegebenen Spannungspotentiale geladen. Wie in Fig. 3 ist die Startschaltung 60 im folgenden wirkungslos.

Die Abtast- und Halteschaltung 6 im Ausführungsbeispiel nach Fig. 4 umfaßt einen Operationsverstärker 70, dessen nicht invertierender Eingang einerseits über eine Speicherkapazität 71 mit dem positiven Speisespannungsanschluß 93 und andererseits über einen Analogschalter 72 mit der Meßwertleitung 23 zum Zuführen der Meßspannung von der Meßimpedanz 4 verbunden ist. Der Analogschalter 72 wird über die Abtastsignalleitung 25 vom Abtastsignal gesteuert, d.h. bei dessen Auftreten leitend geschaltet; während der übrigen Zeit ist der Analogschalter 72 gesperrt. Der invertierende Eingang des Operationsverstärkers 70 ist über einen einstellbaren Spannungsteiler 73 mit Masse 12 verbunden. Ein Abgriff des einstellbaren Spannungsteilers ist mit dem Ausgang des Operationsverstärkers 70 zwecks Rückkopplung verbunden.

In Fig. 4 wird die von der Regelstufe umfaßte Vergleichsanordnung 10 von einem weiteren Operationsverstärker gebildet, dessen invertierender Eingang den Sollwerteingang 28 und dessen nicht invertierender Eingang den Istwerteingang 29 der Vergleichsanordnung 10 bilden. Die Eingänge 28, 29 sind über je einen Vorwiderstand an die Leitung 27 bzw. 26 angeschlossen, wobei die Leitung 26 für den Wert der Meßspannung aus der Abtast- und Halteschaltung 6 mit dem Ausgang des Operationsverstärkers 70 verbunden ist und die Leitung 27 für die den Strom-Sollwert repräsentierende Gleichspannung mit dem Ausgang eines dritten Operationsverstärkers verbunden ist, der den Sollwertsteller 11 bildet. Der den Sollwertsteller 11 bildende Operationsverstärker ist von seinem Ausgang an seinen invertierenden Eingang rückgekoppelt. Sein nicht invertierender Eingang liegt am Abgriff eines Potentiometers, dessen Endanschlüsse mit dem positiven Speisespannungsanschluß 93 bzw. Masse 12 verbunden sind. Über dieses Potentiometer kann der Strom-Sollwert vorgegeben werden.

Die Umschaltstufe 32 in Fig. 4 umfaßt einen ersten Schalter 321, über den die Leitung 26 für den Wert der Meßspannung mit einem Schaltungspunkt 325 verbunden werden kann. Über einen zweiten Schalter 322 kann die Leitung 27 für die den Strom-Sollwert repräsentierende Gleichspannung ebenfalls mit dem Schaltungspunkt 325 verbunden werden. Ein erster Inverter 323 ist mit seinem Eingang an den Ausgang 30 der Vergleichsanordnung 10 angeschlossen und über seinen Ausgang mit dem Eingang eines zweiten Inverters 324 verbunden. Am Ausgang des zweiten Inverters 324 ist ein Stelleingang 311 des ersten Schalters 321, am Ausgang des ersten Inverters 323 ein Stelleingang 312 des zweiten Schalters 322 angeschlossen. Auf diese Weise werden die Schalter 321, 322 gegenläufig durch das Signal am Ausgang 30 der Vergleichsanordnung 10 umgeschaltet. Dadurch wird dem Schaltungspunkt 325 entweder die Meßspannung von der Leitung 26 oder der Strom-Sollwert von der Leitung 27 zugeführt. Die Umschaltung der Umschaltstufe 32 erfolgt durch den Vergleich zwischen dem Wert der Meßspannung und dem Wert der den Strom-Sollwert repräsentierenden Gleichspannung in der Weise, daß dem Schaltungspunkt 325 die Meßspannung zugeführt wird, so lange diese größer ist als der Wert der den Strom-Sollwert repräsentierenden Gleichspannung. Ist dagegen der Sollwert größer als die Meßspannung, wird der zweite Schalter 322 geschlossen und der erste Schalter 321 geöffnet, so daß dem Schaltungspunkt 325 nur der Sollwert zugeführt wird.

Zwischen die Umschaltstufe 32 und die Taktfrequenz-Erzeugungsstufe 7 ist in Fig. 4 ein vierter Operationsverstärker eingefügt, dessen invertierender Eingang über einen Vorwiderstand mit dem Schaltungspunkt 325 verbunden ist und dessen Ausgang an den Eingang der Taktfrequenz-Erzeugungsstufe 7 geführt ist, über den dieser die steuernde Spannung zugeführt wird. Der Ausgang dieses vierten Operationsverstärkers mit dem Bezugszeichen 80 ist über einen einstellbaren Widerstand an seinen invertierenden Eingang rückgekoppelt. Vom invertierenden Eingang führt ferner über einen Vorwiderstand eine Verbindung an den Abgriff eines weiteren Potentiometers, dessen Endanschlüsse mit dem positiven Speisespannungsanschluß 93 bzw. Masse 12 verbunden sind. Der nicht invertierende Eingang des vierten Operationsverstärkers 80 ist an Masse 12 gelegt.

Die zwischen Masse 12 und dem positiven Speisespannungsanschluß 93 angeschlossenen Potentiometer in der Beschaltung des vierten Operationsverstärkers 80 und des Sollwertstellers 11 können wahlweise auch mit einem ihrer Anschlüsse anstelle an den positiven Speisespannungsanschluß an einen Anschluß gelegt werden, über den eine geeignet wählbare Referenzspannung abgegeben werden kann. Dadurch läßt sich die Dimensionierung der dargestellten Schaltungsanordnung variieren. Diese Variation ist jedoch für die grundsätzliche Funktionsweise der Schaltungsanordnung unerheblich und daher nicht näher wiedergegeben. Dasselbe gilt auch für die Beschaltung des Umschalters 94, mit dem die in die Schieberegister 501, 502, 503 einzuspeichernde Signalfolge wahlweise auf ein Tastverhältnis von 1:2 bzw. 1:1 gesetzt werden kann.

Vom Ausgang der vierten Registerzelle des Schieberegisters 501 führt außer einer Verbindung an einen Eingang der ersten Registerzelle des Schieberegisters 502 auch die Leitung 24 an die Impulsformstufe 8, die vorzugsweise als monostabiler Multivibrator ausgeführt ist. Die Zeitdauer des von diesem monostabilen Multivibrator abgegebenen Impulses - folgend auf eine ausgewählte Schaltflanke im Ausgangssignal der vierten Registerzelle des Schieberegisters 501 - ist so gewählt, daß eine definierte Umladung der Speicherkapazität 71 erfolgen kann.

## Patentansprüche

1. Schaltungsanordnung zum Speisen eines Elektromotors (1) mit wenigstens drei Wicklungen aus einer Gleichspannungsquelle (2) über eine Kommutierungsschaltung (3), die zu je einem Wicklungsanschluß (13, 14, 15) des Elektromotors (1) einen Kommutierungszweig (36, 37, 38) mit einem ersten und einem zweiten Schalterelement umfaßt, durch die der betreffende Wicklungsanschluß (13, 14, 15) wahlweise mit einem ersten Anschluß (39) der Gleichspannungsquelle (2) oder über eine Meßimpedanz (4) mit einem zweiten Anschluß (40) der Gleichspannungsquelle (2) verbunden werden kann, mit einer Ringzählvorrichtung (5) zum periodischen Umsteuern der Schalterelemente der Kommutierungsschaltung (3) gemäß einer durch ein Taktsignal in der Ringzählvorrichtung (5) umlaufenden Signalfolge, wobei eine Periode der Ringzählvorrichtung (5) einem vollständigen Umlauf der Signalfolge in der Ringzählvorrichtung (5) entspricht, und mit einer Taktfrequenz-Erzeugungsstufe (7) zum Abgeben des Taktsignals, das eine von der Meßspannung abhängige Taktfrequenz aufweist,
**dadurch gekennzeichnet,**
**daß** mit der Meßimpedanz (4) ein Eingang einer Abtast- und Halteschaltung (6) gekoppelt ist zum Abtasten einer an der Meßimpedanz (4) auftretenden Meßspannung und daß die Abtast- und Halteschaltung (6) durch die Ringzählvorrichtung (5) in jeder ihrer Perioden zu einem vorgebbaren Zeitpunkt außerhalb der Zeitintervalle für das Umsteuern der Schaltelemente der Kommutierungsschaltung (3) zum Aufnehmen eines Abtastwertes der Meßspannung angesteuert wird.

2. Schaltungsanordnung nach Anspruch 1, **dadurch gekennzeichnet,**
**daß** die Ringzählvorrichtung (5) als Schieberegister (50) ausgebildet ist und eine Anzahl von Registerzellen aufweist, die wenigstens der doppelten Anzahl der Schalterelemente der Kommutierungsschaltung (3) entspricht.

3. Schaltungsanordnung nach Anspruch 2, **dadurch gekennzeichnet,**
**daß** ein Zeitraum zwischen je zwei aufeinander folgenden Umsteuervorgängen der Schalterelemente der Kommutierungsschaltung (3) wenigstens zwei Perioden des Taktsignals entspricht und das Ansteuern der Abtast- und Halteschaltung (6) durch eine Flanke des Taktsignals innerhalb des genannten Zeitraumes ausgelöst wird.

4. Schaltungsanordnung nach Anspruch 2 oder 3, **dadurch gekennzeichnet,**
**daß** jede *n-te Registerzelle der Ringzählvorrichtung* (5) mit einem der Schalterelemente der Kommutierungsschaltung (3) verbunden ist, wobei n der Quotient aus der Anzahl der Registerzellen und der Anzahl der Schalterelemente ist, und daß ein Abtastsignal zum Auslösen eines Abtastvorgangs in der Abtast- und Halteschaltung (6) aus einer Registerzelle abgeleitet wird, die sich im Schieberegister (50) zwischen zwei aufeinander folgenden, mit je einem der Schalterelemente der Kommutierungsschaltung (3) verbundenen Registerzellen befindet.

5. Schaltungsanordnung nach Anspruch 4, **gekennzeichnet durch**
eine Impulsformstufe (8) zum Ableiten eines impulsförmigen Abtastsignals aus der Ringzählvorrichtung (5).

6. Schaltungsanordnung nach einem der vorhergehenden Ansprüche, **gekennzeichnet durch**
eine Eingabeschaltung (9) zum Speichern wenigstens einer vorgebbaren Signalfolge und zum einmaligen Eingeben dieser Signalfolge in die Ringzählvorrichtung (5) bei Inbetriebnahme der Schaltungsanordnung.

7. Schaltungsanordnung nach einem der vorhergehenden Ansprüche, **dadurch gekennzeichnet,**
**daß** die Abtast- und Halteschaltung (6) mit einer Regelstufe (10,11,32) zum Regeln der Drehzahl des Elektromotors (1) auf einen vorgebbaren Wert verbunden ist, der der Regelstufe (10, 11, 32) als Strom-Sollwert zuführbar ist, daß die Regelstufe (10,11,32) eine Vergleichsanordnung (10) enthält zum Bilden eines Vergleichssignals durch Vergleichen des Strom-Sollwertes mit den Abtastwerten der Meßspannung und daß das Vergleichssignal zum Ableiten des Taktsignals der Taktfrequenz-Erzeugungsstufe (7) zugeführt wird.

8. Elektrischer Antrieb, **gekennzeichnet durch**
eine Schaltungsanordnung nach einem der vorhergehenden Ansprüche.

9. Elektrisches Gerät, **gekennzeichnet durch**
einen Antrieb nach Anspruch 8.

## Claims

1. A circuit arrangement for powering an electric motor (1) having at least three windings from a direct voltage source (2) via a commutation circuit (3) which, for each winding terminal (13, 14, 15) of the electric motor (1), comprises a commutation branch (36, 37, 38) including a first and a second switching element by which the relevant winding terminals (13, 14, 15) can be connected selectively to a first terminal (39) of the direct voltage source (2) or, via a measurement impedance (4), to a second terminal (40) of the direct voltage source (2), the circuit arrangement having a ring counter device (5) for periodically changing over the switching elements of the commutation circuit (3) in accordance with a signal series which is cycled through the ring counter device (5) under the control of a clock signal, one period of the ring counter device (5) corresponding to one complete cycle of the signal series through the ring counter device (5), and having a clock frequency generating stage (7) for supplying the clock signal whose clock frequency is dependent on the measurement voltage, **characterized in that** a sample and hold circuit (6) has an input coupled to the measurement impedance (4) in order to sample a measurement voltage appearing across the measurement impedance (4), and **in that** the ring counter device (5), in each of its periods, controls the sample and hold circuit (6) so as to acquire a sampled value of the measurement voltage at a presettable instant outside the time interval for the change-over of the switching elements of the commutation circuit (3).

2. A circuit arrangement as claimed in claim 1, **characterized in that** the ring counter device (5) is formed by a shift register (50) and has a number of register cells which corresponds to at least twice the number of switching elements of the commutation circuit (3).

3. A circuit arrangement as claimed in claim 2, **characterized in that** a time interval between every two successive change-over operations of the switching elements of the commutation circuit (3) corresponds to at least two periods of the clock signal, and the activation of the sample and hold circuit (6) is started by an edge of the clock signal within said time interval.

4. A circuit arrangement as claimed in claim 2 or 3, **characterized in that** every n^{th} register cell of the ring counter device (5) is connected to one of the switching elements of the commutation circuit (3), n being the quotient of the number of register cells and the number of switching elements, and **in that** a sampling signal for starting a sampling operation in the sample and hold circuit (6) is acquired from a register cell which, in the shift register (50), is situated between two successive register cells which are each connected to one of the switching elements of the commutation circuit (3).

5. A circuit arrangement as claimed in claim 4, **characterized by** a pulse shaper stage (8) for acquiring a pulse-shaped sampling signal from the ring counter device (5).

6. A circuit arrangement as claimed in any one of the preceding claims, **characterized by** an input circuit (9) for storing at least one presettable signal series and for the non-recurrent input of this signal series into the ring counter device (5) when the circuit arrangement is put into operation.

7. A circuit arrangement as claimed in any one of the preceding claims, **characterized in that** the sample and hold circuit (6) is connected to a control stage (10, 11, 32) for controlling the speed of the electric motor (1) at a presettable value, which can be applied to the control stage (10, 11, 32) as a nominal current value, **in that** the control stage (10, 11, 32) includes a comparator circuit (10) for generating a comparison signal by comparing the nominal current value with the sampled values of the measurement voltage, and **in that** the comparison signal is applied to the clock frequency generating stage (7) in order to derive the clock signal.

8. An electrical drive system, **characterized by** a circuit arrangement as claimed in any one of the preceding claims.

9. Electrical appliances, **characterized by** a drive system as claimed in claim 8.

## Revendications

1. Circuit d'alimentation d'un moteur électrique (1) avec au moins trois enroulements à partir d'une source de tension continue (2) par l'intermédiaire d'un circuit de commutation (3) qui comprend respectivement pour chacune des bornes d'enroulement (13, 14, 15) du moteur électrique (1) une branche de commutation (36, 37, 38) avec des premier et deuxième éléments commutateurs par lesquels la borne d'enroulement correspondante (13, 14, 15) peut au choix être reliée avec une première borne (39) de la source de tension continue (2) ou par l'intermédiaire d'une impédance de mesure (4) avec une deuxième borne (40) de la source de tension continue (2), avec un dispositif de comptage en anneau (5) pour la commande périodique des éléments commutateurs du circuit de commutation (3) conformément à une séquence de signaux d'un circuit circulant par un signal de rythme dans le dispositif de comptage en anneau (5), une période du dispositif de comptage en anneau (5) correspondant à un tour complet de la séquence de signaux dans le dispositif de comptage en anneau (5) et avec un étage de production de fréquence de rythme (7) en vue de délivrer le signal de rythme qui présente une fréquence de rythme dépendant de la tension de mesure, **caractérisé en ce**
**qu'**une entrée d'un montage à échantillonnage et mémorisation (6) est couplée à l'impédance de mesure (4) pour le balayage d'une tension de mesure présente sur l'impédance de mesure (4) et que le montage à échantillonnage et mémorisation (6) est commandé par le dispositif de comptage en anneau (5) dans chacune de ses positions à un moment à déterminer préalablement en dehors des intervalles de temps pour la commande des éléments de commutation du circuit de commutation (3) en vue de l'intégration d'une valeur de balayage de la tension de mesure.

2. Circuit selon la revendication 1, **caractérisé en ce**
**que** le dispositif de comptage en anneau (5) est conçu comme un registre à décalage (50) et présente un nombre de cellules de registre qui correspond au moins au double du nombre d'éléments commutateurs du circuit de commutation (3).

3. Circuit selon la revendication 2, **caractérisé en ce**
**qu'**un intervalle entre deux processus de commande successifs des éléments commutateurs du circuit de commutation (3) correspond au moins à deux périodes du signal de rythme et que la commande du montage à échantillonnage et mémorisation (6) est déclenché par un flanc du signal de rythme à l'intérieur de l'intervalle de temps donné.

4. Circuit selon l'une des revendications 2 ou 3,
**caractérisé en ce que** chaque nième cellule de registre du dispositif de comptage en anneau (5) est reliée à l'un des éléments commutateurs du circuit de commutation (3), n étant le quotient du nombre de cellules de registre et du nombre des éléments commutateurs et qu'un signal de balayage pour le déclenchement d'un processus de balayage dans le montage à échantillonnage et mémorisation (6) est dérivé d'une cellule de registre qui se trouve dans le registre à décalage (50) entre deux cellules de registre successives reliées respectivement à l'un des éléments commutateurs du circuit de commutation (3).

5. Circuit selon la revendication 4, **caractérisé par** un étage formateur d'impulsions (8) pour dériver un signal de balayage pulsé du dispositif de comptage en anneau (5).

6. Circuit selon l'une des revendications précédentes, **caractérisé par** un circuit d'introduction (9) pour l'enregistrement d'au moins une séquence de signaux à déterminer préalablement et pour l'introduction unique de cette séquence de signaux dans le dispositif de comptage en anneau (5) en cas de mise en service du circuit.

7. Circuit selon l'une des revendications précédentes, **caractérisé en ce que** le montage à échantillonnage et mémorisation (6) est relié à un étage de réglage (10, 11, 32) pour le réglage de la vitesse de rotation du moteur électrique (1) à une valeur à déterminer préalablement qui peut être amenée à l'étage de réglage (10, 11, 32) comme valeur de consigne de courant, que l'étage de réglage (10, 11, 32) contient un dispositif de comparaison (10) pour la formation d'un signal de comparaison par comparaison de la valeur de consigne de courant avec les valeurs de balayage de la tension de mesure et que le signal de comparaison est amené à l'étage de production de la fréquence de rythme (7) pour dériver le signal de rythme.

8. Entraînement électrique **caractérisé par** un circuit selon l'une des revendications précédentes.

9. Appareil électrique **caractérisé par** un entraînement selon la revendication 8.
